**Europäisches Patentamt**

(19) **European Patent Office**

**Office européen des brevets**

(11) Numéro de publication: **0 052 563**

**A1**

(12) # DEMANDE DE BREVET EUROPEEN

(21) Numéro de dépôt: **81401781.0**

(22) Date de dépôt: **10.11.81**

(51) Int. Cl.³: **B 63 B 17/02**
**B 60 J 11/00, B 32 B 27/12**

(30) Priorité: **14.11.80 FR 8024283**

(43) Date de publication de la demande:
**26.05.82 Bulletin 82/21**

(84) Etats contractants désignés:
**AT BE CH DE GB IT LI LU NL SE**

(71) Demandeur: **Orefice, Pascal**
**3 rue La Boétie**
**F-75008 Paris(FR)**

(72) Inventeur: **Orefice, Pascal**
**3 rue La Boétie**
**F-75008 Paris(FR)**

(74) Mandataire: **Thibon-Littaye, Annick**
**Cabinet A. THIBON-LITTAYE 11 rue de l'Etang**
**F-78160 Marly Le Roi(FR)**

(54) **Bâche de protection extérieure élastique.**

(57) Bâche, essentiellement réalisée en un voile complexe comportant un tricot de fibres textiles élastiques et une couche d'imperméabilisation thermocollée sur le tricot. La bâche de protection comporte également un dessus continu, plan à l'état de repos et de forme simple, présentant cependant au moins deux extensions respectivement sur deux côtés opposés, un dessous formant des poches sous lesdites extensions.

Fig. 1

EP 0 052 563 A1

- 1 -

Bâche de protection extérieure élastique

La présente invention concerne les bâches permettant de protéger tout objet, ou tout espace, en l'isolant du milieu extérieur, et qui sont réalisées à partir d'une matière extensible.

Elle a plus précisément pour objet un système de protection qui est principalement constitué par un voile en matière textile de grande résistance, possédant des propriétés isolantes et un taux d'élasticité élevé et bien réparti.

Conformément à l'invention, un tel système de protection est destiné notamment à isoler du milieu extérieur des objets complexes, aux formes diverses, la matière textile de la bâche étant telle qu'elle puisse se mouler autour de formes variées et être maintenue dans la forme tendue sur les objets d'une manière particulièrement simple.

En fait, il est déjà connu de protéger des objets en les isolant du milieu extérieur par une bâche qui les entoure. Toutefois, les systèmes de protection de ce genre actuellement connus, utilisant principalement une matière textile tissée, présentent des formes bien déterminées en fonction de l'usage auquel ils sont destinés. Il est donc nécessaire de connaître exactement l'objet que l'on veut protéger, d'en relever les cotes, d'en faire un descriptif, pour déterminer le patron d'assemblage des différents éléments qui, une fois découpés et assemblés, permettront d'habiller l'objet. La bâche de protection est donc dans ce cas la réplique tridimensionnelle du volume de l'objet à protéger et sa réalisation demande des travaux préparatoires qui nécessitent du temps, de la précision et posent également souvent des problèmes de décomposition d'une forme tridimensionnelle en éléments plans susceptibles de redonner la forme après assemblage. Ces bâches connues ne peuvent donc servir qu'à protéger l'unique objet pour lequel elles ont été fabriquées.

De plus, leur utilisation n'est pas toujours aisée. En effet, ces bâches, fabriquées dans un matériau souple mais non élastique, sont "inertes", très difficile à disposer correctement (formation de plis, de poches), et l'on doit souvent leur adjoindre un système d'accrochage annexe pour les rendre solidaires de l'objet qu'elles protègent. Par exemple, un système d'oeillet et de cordage, qui nécessite, de plus, d'avoir prévu les attaches correspondantes sur l'objet.

Le système de protection selon l'invention permet d'éviter ces inconvénients des systèmes antérieurs grâce essentiellement à la combinaison de l'emploi d'un tricot de fibres textiles, revêtu d'une couche d'imperméabilisation, pour la fabrication de la bâche et d'un système de mise en tension de celle-ci qui consiste à prévoir des poches d'accrochage dans la forme même de la bâche pour la tendre à l'utilisation sur l'objet.

Alors que les tissus sont couramment formés de deux séries de fils entrecroisés à angle droit, composant une texture pratiquement rigide, un tricot, tel que celui qui est utilisé dans la présente invention, s'en distingue par le fait qu'il est formé d'un réseau de boucles entrelacées, dans lequel un même fil forme une série de boucles ou mailles. Il s'agit en général des tissus couramment désignés comme des jerseys. On sait rendre de tels tricots imperméables au moyen d'une couche d'imperméabilisation qui est constituée par un film en matière élastomère, du type de polyuréthane par exemple, qui lors de la fabrication du voile, ici de la bâche, est collé à chaud sur le tricot. Le film élastomère présente une élasticité du même ordre de grandeur que celle du tricot et les deux surfaces sont pressées l'une sur l'autre pendant que l'ensemble est chauffé à une température suffisante pour provoquer la fusion superficielle de l'élastomère qui se fixe ainsi au tricot lors du refroidissement.

L'application d'un tel voile complexe dans le système de protection selon l'invention, permet de réaliser des bâches de protection de forme simple, et de les utiliser pour protéger des objets de formes tridimensionnelles complexes et de tailles et volumes différents, en utilisant les importantes réserves d'élasticité que présente la bâche ainsi constituée.

Pour maintenir le voile élastique imperméable sur l'objet à protéger, la bâche comporte de préférence des poches formées à des extrémités susceptibles de s'adapter sur des parties saillantes de l'objet . De telles poches sont formées par une seconde épaisseur de voile assemblée par couture à la surface principale qui recouvre l'objet, la couture étant réalisée pour être elle aussi à la fois élastique et imperméable.

Dans un cas d'application préférée de l'invention, la bâche est destinée à protéger des bateaux pneumatiques. Un même modèle de la bâche selon l'invention permet de protéger toute une gamme de bateaux de tailles et de formes différentes du moment qu'il s'agit de modèles présentant des parties saillantes rigides correspondant à la place des poches sur la bâche.

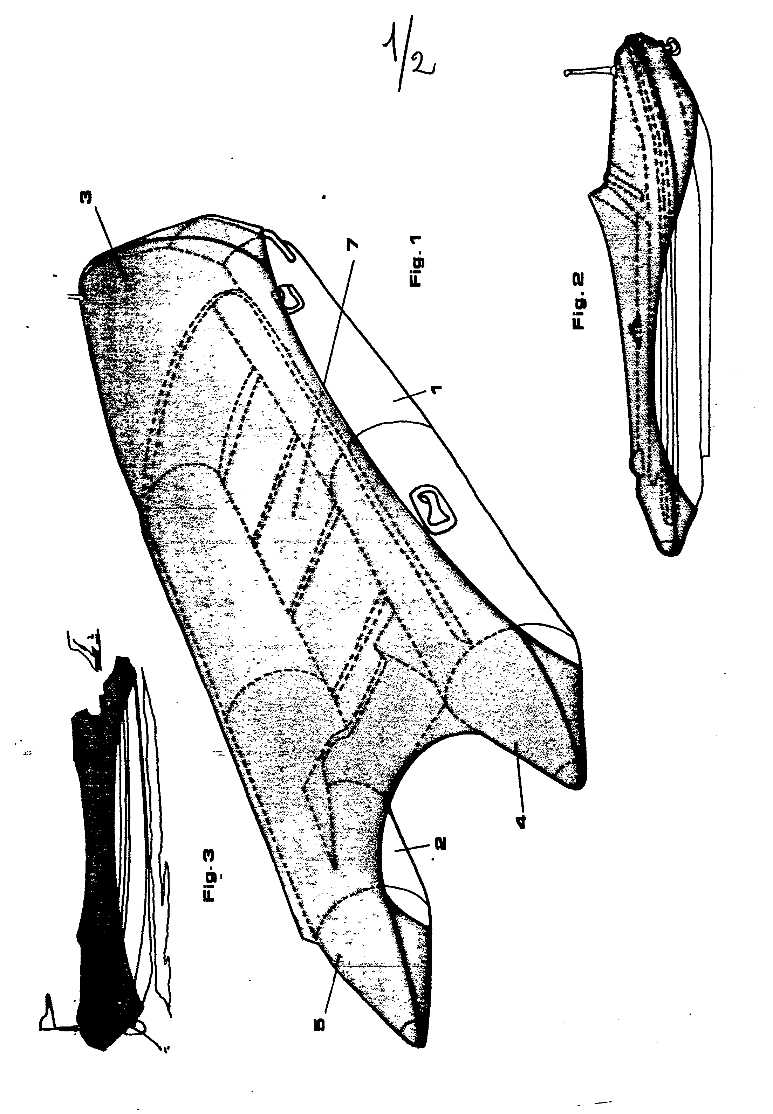

L'invention sera maintenant plus complètement décrite en se référant au cas d'application préférée de la protection des bateaux pneumatiques. La description fait référence aux figures 1 à 6 dans lesquelles :

La figure 1 représente le bateau protégé par la bâche dans une vue générale en perspective ;

la figure 2 représente une vue de profil du même bateau ;

la figure 3 est un analogue de la figure 2, mais pour le bateau équipé de son moteur ;

la figure 4 montre le dessus de la bâche en position naturelle avant mise en place sur le bateau ;

la figure 5 représente la bâche de la figure 4, vue de dessous ; et

la figure 6 illustre une variante de réalisation de la bâche, en vue de dessous.

Dans le cas particulier de l'exemple considéré, la bâche selon l'invention est conformée pour servir à protéger les bateaux pneumatiques qui comportent essentiellement, comme ceux qui sont commercialisés sous les marques Zodiac et Sillinger, deux boudins latéraux gonflés 1 et 2 de part et d'autre d'un plancher central 7 se rejoignant pour former le nez du bateau.

On voit donc qu'un tel bateau forme trois parties saillantes qui sont constituées , d'une part par le nez 3, et d'autre part par les extrémités arrière 4, 5, généralement coniques, des deux boudins.

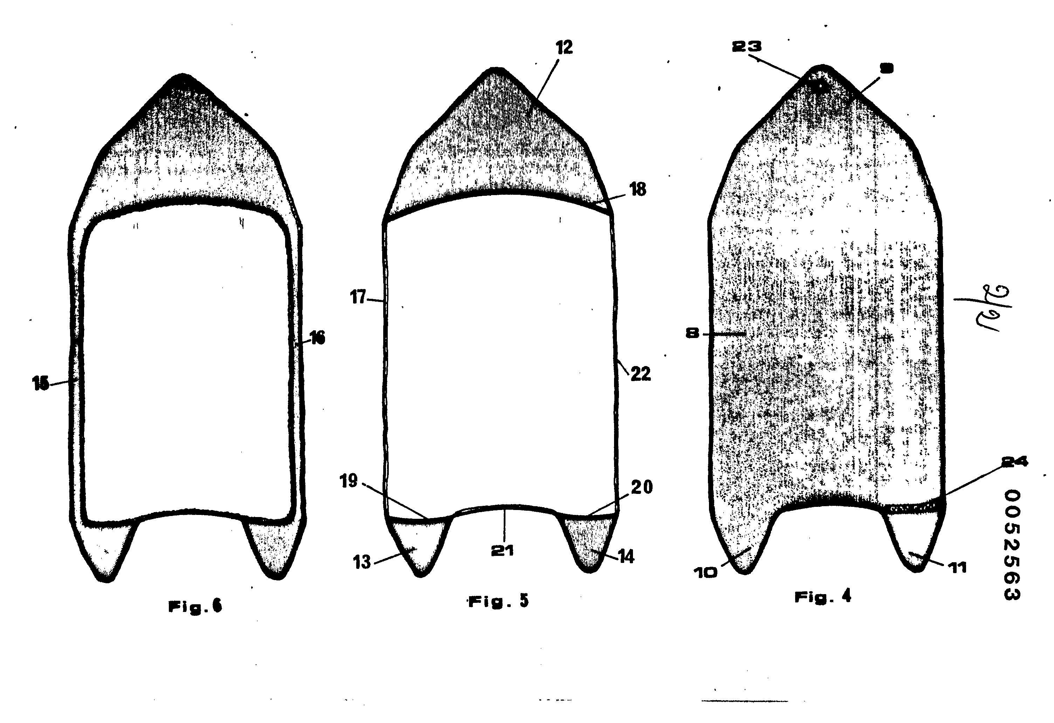

La forme naturelle de la bâche, avant tension sur le bateau, apparait sur les figures 4 et 5. Le dessus 8 est de forme simple, sensiblement rectangulaire, avec seulement trois extensions triangulaires 9, 10 et 11. La première, 9, se situe au milieu d'un petit côté de la bâche, pour le nez du bateau. Les deux autres, 10 et 11, sont disposées latéralement pour les extrémités des boudins. Sur la face opposée (dessous), la bâche comporte trois morceaux 12, 13, 14, qui recouvrent les extensions 9, 10 et 11. Dans la variante de la figure 6, les trois morceaux sont réunis par des bandes latérales 15 et 16.

Le voile dans lequel les différentes parties de la bâche sont découpées est constitué d'un tricot textile en fibres de grande élasticité, telles que les fibres artificielles texturées. On peut utiliser en particulier un jersey qui est composé d'un mélange de fibres polyamides et de fibres du type désigné par la marque Lycra, dans la proportion de l'ordre de 80 % et 20 % respectivement. En plus de ce tricot, le voile complexe comporte un film imperméabilisant en un élastomère tel que les résines de polyuréthane. A la fabrication du voile, ce film est thermocollé sur le tricot. Dans une autre forme de réalisation, le voile utilisable pour constituer la bâche comprend trois couches de matériaux : deux épaisseurs de tricot textile élastique enserrant une couche imperméabilisante de mousse d'un élastomère du type des marques Néoprène ou Hypalon. Les différents éléments découpés dans de tels voiles aux formes du dessus 8 et des trois pièces du dessous 12, 13, 14, sont assemblés sur le pourtour de la bâche par des coutures réalisées de manière à présenter sensiblement les mêmes propriétés d'élasticité et d'étanchéité que le voile lui-même. En général, on utilise des fils texturés, dans des coutures quatre aiguilles au point de chaînette et l'imperméabilisation est réalisée par collage au moyen d'une colle élastique (au néoprène par exemple). La bâche comporte en outre des galons de renforcement qui sont couturés sur tous les bords non assemblés, en 17, 18, 19, 20, 21 et 22, sur la figure 5.

La figure 4 montre aussi sur le dessus 8 de la bâche une lumière 23 qui peut être utile pour laisser passer le porte-drapeau de certains bateaux. Par ailleurs, elle illustre l'utilisation de l'une des poches de la bâche pour son rangement. L'ensemble de la bâche peut être replié et rentré à l'intérieur de la poche qui peut alors être fermée par un système comprenant deux bandes coopérantes, l'une 24 sur le dessus de la bâche, visible sur la figure 4, l'autre sur l'épaisseur de dessous, non visible sur la figure 5.

Naturellement, l'invention n'est nullement limitée aux détails de réalisation qui ont été décrits, qu'il s'agisse de la forme de la bâche, de la constitution du voile ou du mode d'assemblage. Elle est susceptible de nombreuses variantes, la bâche pouvant être adaptée à de nombreuses applications. Une bâche pour automobiles comportera par exemple des poches à la forme des pare-chocs avant et arrière, tandis qu'un véhicule militaire ne manquera pas de parties saillantes auxquelles adapter des poches conçues à cet effet.

## REVENDICATIONS

1. Bâche de protection extérieure élastique, caractérisée en ce qu'elle est essentiellement réalisée en un voile complexe comportant un tricot de fibres textiles élastiques et une couche d'imperméabilisation thermocollée sur le tricot.

2. Bâche de protection selon la revendication 1, caractérisée en ce qu'elle comporte un dessus (8) continu, plan à l'état de repos et de forme simple, présentant cependant au moins deux extensions (9, 10) respectivement sur deux côtés opposés, un dessous formant des poches (12, 13, 14) sous lesdites extensions.

3. Bâches de protection selon la revendication 2, caractérisée en ce que lesdites poches sont disposées pour s'adapter sur les parties saillantes (3, 4, 5) d'un objet à protéger tel qu'un bateau pneumatique, l'une sur le nez (3) du bateau, deux autres (4,5) latéralement sur des extrémités arrière .

4. Bâche de protection selon la revendication 2, ou 3, caractérisée en ce que le dessous de la bâche est assemblé au dessus (8) par des coutures élastiques et imperméabilisées, au moins sur le pourtour desdites extensions.

5. Bâche de protection selon l'une quelconque des revendications 2 à 4, caractérisée en ce qu'elle comporte des moyens de fermeture de l'une desdites poches constituant poche de rangement pour l'ensemble de la bâche repliée.

6. Bâche de protection selon l'une quelconque des revendications 1 à 5, caractérisée en ce que le voile complexe comprend au moins un jersey de fibres synthétiques texturées et un film élastomère à base de polyuréthane.

7. Bâche de protection selon l'une quelconque des revendications 1 à 6, caractérisée en ce qu'elle présente une forme adaptée pour recouvrir un bateau pneumatique par tension entre des parties saillantes (3, 4, 5) de celui-ci.

0052563

1/2

Fig. 1

Fig. 2

Fig. 3

Fig. 6

Fig. 5

Fig. 4

15 16 12 18 17 22 19 20 13 21 14 23 8 8 24 10 11

2/2

0052563

**Office européen des brevets**

## RAPPORT DE RECHERCHE EUROPEENNE

Numéro de la demande
EP 81 40 1781

| Catégorie | Citation du document avec indication, en cas de besoin, des parties pertinentes | Revendication concernée |
|---|---|---|
| | **DOCUMENTS CONSIDERES COMME PERTINENTS** | |
| Y | US - A - 3 819 401 (J.T. MASSEN-GALE et al.) | |
| | * Colonne 1, lignes 1-62; colonne 3, lignes 66-68; colonne 4, lignes 1-16 * | 1 |
| | --- | |
| A | FR - A - 2 343 620 (J.C. BALLAND) | |
| | * Page 2, lignes 17-29; figures 1-5 * | 1 |
| | --- | |
| Y | FR - A - 2 258 262 (VITOS ETABLISSEMENTS VITOUX) | |
| | * En entier * | 1,6 |
| | --- | |
| A | FR - A - 2 437 951 (ETABLISSE-MENTS P. TORE) | |
| | * En entier * | 1 |
| | ------ | |

**CLASSEMENT DE LA DEMANDE (Int. Cl. 3)**

B 63 B 17/02
B 60 J 11/00
B 32 B 27/12

**DOMAINES TECHNIQUES RECHERCHES (Int. Cl. 3)**

A 41 D
B 32 B
B 60 J
B 60 P
B 63 B

**CATEGORIE DES DOCUMENTS CITES**

X: particulièrement pertinent à lui seul
Y: particulièrement pertinent en combinaison avec un autre document de la même catégorie
A: arrière-plan technologique
O: divulgation non-écrite
P: document intercalaire
T: théorie ou principe à la base de l'invention
E: document de brevet antérieur, mais publié à la date de dépôt ou après cette date
D: cité dans la demande
L: cité pour d'autres raisons
&: membre de la même famille, document correspondant

| | | |
|---|---|---|
| X | Le présent rapport de recherche a été établi pour toutes les revendications | |

| Lieu de la recherche | Date d'achèvement de la recherche | Examinateur |
|---|---|---|
| La Haye | 18-02-1982 | PRUSSEN |

OEB Form 1503.1   06.78